# EUROPEAN PATENT SPECIFICATION

(11) **EP 4 587 315 B1**
(45) Date of publication and mention of the grant of the patent: **03.06.2026**
(21) Application number: 23769220.7
(22) Date of filing: 13.09.2023
(51) Int. Cl.: B62D 29/00, B62D 25/00

(54) **COMPOSITE COMPONENT AND PROCESS FOR ITS PRODUCTION**
VERBUNDBAUTEIL UND VERFAHREN ZU DESSEN HERSTELLUNG
COMPOSANT COMPOSITE ET SON PROCÉDÉ DE PRODUCTION

(30) Priority: 14.09.2022 EP 22195703
(43) Date of publication of application: 23.07.2025
(73) Proprietor: BASF SE, 67056 Ludwigshafen am Rhein (DE)
(72) Inventor: WUEST, Andreas, 67056 Ludwigshafen (DE); SKRZYPCZAK, Guillaume Pierre Jean, 67056 Ludwigshafen (DE)
(74) Representative: BASF IP Association
(86) International application number: PCT/EP2023/075150
(87) International publication number: WO 2024/056736

(56) References cited:
- US-A1- 2021 086 841
- US-B1- 6 247 287
- US-B1- 6 305 136

## Description

The invention relates to a composite component comprising a hollow structure and a foamed component which is inserted in the hollow structure and where a gap is formed between the foamed component and the hollow structure.

Foamed components which are inserted into hollow structures are used for example in the automotive industry as stiffening inserts for mechanical stiffening or as energy absorbing inserts for energy absorption in the event of a crash. Due to the construction of the vehicle chassis, the foamed components usually are inserted into the hollow structure before painting. For this reason, it is necessary to maintain a gap between the foamed component and the hollow structure during the cataphoretic painting process. To achieve sufficient corrosion stability, all metallic surfaces are coated with an anticorrosive. To apply the anticorrosive on all surfaces, the vehicle chassis is treated by cataphoretic painting. During cataphoretic painting, the vehicle chassis is immersed into an immersion bath containing a coating liquid with the anticorrosive.

During immersion of the vehicle chassis in the immersion bath, the coating liquid reaches all free surfaces and the anticorrosive deposits on these free surfaces. The coating liquid also flows into the gap between the hollow structure and the foamed component and, thus, the coating liquid also can be applied to those surfaces of the hollow structure which are adjacent to the foamed component.

To provide the gap, presently spacer points are formed on the outer surface of the foamed component. The spacer points for example have the form of spherical domes to minimize the contact area between the foamed component and the hollow structure. Alternatively, the gap is provided by using adhesive pads which define the gap and hold the foamed component in a desired distance to the surfaces of the hollow structure.

Besides inserting a foamed component into a hollow structure, it is further known for example from EP-A 2 383 170 to use an insert part produced from a material with high tensile strength, which can be inserted into a hollow profile or a U-profile and which can be connected a its ends to the hollow profile or U-profile, for reinforcing the hollow profile or the U-profile. To achieve the reinforcing properties, there must be a distance between the insert part and the hollow profile or U-profile. This distance is achieved by a spacing element which lies with one side against the profile and with the other against the insert part.

US 6 247 287 B1 discloses a composite component comprising a hollow structure and a foamed component inserted in the hollow structure and a method for producing such a component.

It was an object of the present invention to provide a composite component comprising a hollow structure and a foamed component, which allows a simple fixation of the foamed component with a continuous gap between the foamed component and the hollow structure and which additionally increases the performance, particularly regarding energy absorption, of the composite component. It was a further object to provide a process for producing such a composite component.

This object is achieved by a composite component comprising a hollow structure and a foamed component which is inserted in the hollow structure, a gap being formed between the hollow structure and the foamed component, wherein a tension-active reinforcing structure is connected to the foamed component and end-portions of the tension-active reinforcing structure are connected to the hollow structure in such a way that the foamed component does not contact the hollow structure and the gap is formed between the hollow structure and the foamed component.

Surprisingly, by using the tension-active reinforcing structure particularly the energy absorbing properties of the composite component can be further increased, even though there is no spacing element provided which lies with one side against the hollow structure and with the other side against the tension-active reinforcing structure. Further, by connecting the end-portions of the tension-active reinforcing structure to the hollow structure, the fixation of the foamed component in the hollow structure can be simplified.

It is a part of the invention, that more than one tension-active reinforcing structure can be used to better adapt to different mechanical loads.

The hollow structure may be a closed hollow structure like a tube or a closed channel or an open hollow structure like a U-profile. If the hollow structure is a closed hollow structure, the hollow structure may have any cross sectional geometry, for example circular, triangular, rectangular or any other polygonal shape. Besides these channel-like geometries, the cross sectional geometry of the closed channel may also comprise recesses or may have an irregular cross sectional area. If the hollow structure is an open hollow structure, also in this case, the hollow structure may have any cross sectional shape besides a U-shape, for example a V-shape, a W-shape or a shape with recesses. Further, independently of whether the hollow structure is an open hollow structure or a closed hollow structure, the cross sectional shape may change along the hollow structure.

The hollow structure may be made of any suitable material, for example from metal or optionally reinforced polymer. Preferably, the hollow structure is made of a metal and particularly of steel or aluminum.

The foamed component preferably is made of a polymer foam. However, besides a polymer foam, also any other foamed material, for example a metal foam or a glass foam may be used for producing the foamed component.

Suitable polymers for producing the foamed component may be for example polyurethanes or polyamides. Preferably, the polymer foam is a polyamide foam, for example a polyamide foam based on polyamide 6, polyamide 6/6.36, polyamide 12, polyamide 610, polyamide 6/66, polyamide 6.12 or a copolyamide.

Preferably, the polyamide is a polyamide as described for example in WO-A 2020/016102 or a copolyamide as described for example in WO-A 2021/052881.

Thus, the polyamide may be for example a polyamide produced by polymerization of
(i) 15 to 84 wt-% of at least one lactam,
(ii) 16 to 85 wt-% of a monomer mixture comprising
   (ii1) at least one C₃₂-C₄₀ dimer acid and
   (ii2) at least one C₄-C₁₂ diamine,
wherein the monomer mixture comprises 45 to 55 mol-% of the component (ii1) and 55 to 45 wt-% of the component (ii2), based on the total amount of the monomer mixture, and the sum of the components (i) and (ii) is 100 wt-%.

If the polyamide is a copolyamide, the polyamide may be for example a polymer mixture comprising
(A) from 5 to 75 wt% of at least one copolyamide prepared by polymerizing
   (A1) from 15 ot 84 wt-% of at least one lactam,
   (A2) from 16 to 85 wt-% of monomer mixture comprising
      (M1) at least one C₃₂-C₄₀ dimer acid and
      (M2) at least one C₄-C₁₂ diamine,
   where the sum of the components A1 and A2 is 100 wt-%, and
(B) from 25 to 95 wt-% of at least one polyamide which is different from the copolyamide (A).

The polyamide (B) may be selected from the group consisting of polycaprolactam (PA6), polybutylene adipamide (PA4.6), polyhexamethylene adipamide (PA6.6), polyhexamethylene sebacamide (PA6.10), polyhexamethylene dodecanamide (PA6.12), poly-11-aminoundecanamide (PA11), polylaurolactam (PA12), poly-m-xylylene adipamide (PAMXD 6), polypentamethylene sebacamide (PA510), 6T / Z (Z=lactam), 6T / 6I / XY, 6T / XT (X=straight-chain or branched C₄-C₁₈-diamine), XT (X = C₄-C₁₈-diamine), PA PACM 12 (PACM = p-diaminodicyclohexylmethane), PA MACM 12 (MACM = 3,3-dimethyl-p-diaminodicyclohexylmethane), PA MPMD 6 (MPMD = 2-methyl pentamethylene diamine), PA MPMD T, PA MPMD 12, polyhexamethylene isophthalamide (PA 6I), polyhexamethylene isophthalamide cohexamethylene terephthalamide (PA 6I/6T), PA 6-3-T (terephthalic acid polyamide and mixtures of 2,2,4- and 2,4,4-trimethylhexamethylenediamine), polybutylene sebacamide (PA 4.10), polydecamethylene sebacamide (PA 10.10), polypentamethylene adipamide (PA 5.6), PA 6/66 and PA 66/6, PA 6Y (Y = C₄-C₁₈-diacid) and their transamidation products.

Using a polyamide foam has the advantage that such a foamed component made of the polyamide foam is temperature-stable, particularly regarding the temperatures which occur during a coating process.

The polymer of the polymer foam may comprise additives like reinforcing additives, dyes, plasticizers, stabilizers, for example UV-stabilizers and/or flame retardants to set the properties of the polymer foam. If the polymer for the polymer foam comprises reinforcing additives, these may be for example short fibers or pulverulent additives like talcum. If short fibers are used, the fibers may be for example carbon fibers, glass fibers, aramid fibers or mineral fibers.

The foamed component may be made of an open-cell foam or a closed-cell foam. Further, the foamed secondary component also may be made of a combination of an open-cell foam and a closed-cell foam and contain open cells and closed cells. The foam, the foamed component is made of, may be a particle foam or a continuous foam, a particle foam being preferred.

The foamed component may have any cross sectional shape with the provision that the shape is such that the foamed component can be inserted into the hollow structure and a gap can be formed between the inner walls of the hollow structure and the surface of the foamed component. The foamed component may have a cross sectional shape which corresponds to the cross sectional shape of the hollow structure but is slightly smaller. These corresponding shapes allow for a regular gap between the hollow structure and the shaped component. However, depending on the desired properties of the composite component, the foamed component also may have a cross sectional shape which differs from the cross sectional shape of the hollow structure, for example by providing recesses or projections in the foamed component at positions where are no recesses or projections in the hollow structure.

The tension-active reinforcing structure used in the composite component preferably is made of a material which allows the composite component to be reinforced if a bending load acts on the composite component. Suitable materials for example are metals which allow for an elastic deformation or which act like a spring. Suitable materials for the tension-active reinforcing structure for example are continuous fiber reinforced polymers or, preferably, metals. Preferred metals the tension-active reinforcing structure may be made of, for example, are steel or aluminum. The material of the tension-active reinforcing structure is preferably made out of the same material as the hollow structure as this facilitates the mechanical connection between both (e.g. welding).

The tension-active reinforcing structure may have any suitable shape. Preferably, the tension-active reinforcing structure is a beam, a strip, or a rod. The shape of the tension-active reinforcing structure, thereby, is such that at least two end-portions of the tension-active reinforcing structure protrude from the foamed component.

In the composite component, the foamed component is connected to the tensile-active reinforcing structure. To connect them, it is preferred that the tensile-active reinforced structure is integrated into the foamed component and that, therefore, the foamed component encloses the tensile-active reinforcing structure at least partly. Alternatively, it is also possible that the tensile-active reinforcing structure is connected to one surface of the foamed component, and, thus, in the composite component, one surface of the tensile-active reinforcing structure lies face-to-face to an inner surface of the hollow structure. However, preferably, the foamed component encloses the tensile-active reinforcing structure such that only the end-portions of the tensile-active reinforcing structure protrude from the foamed component.

The protruding end-portions are shaped in such a way that the end-portions can be connected to the hollow structure and that after connecting the end-portions to the hollow structure a gap is formed between the foamed component and the hollow structure, wherein the gap preferably surrounds the whole foamed component such that there is no contact between the foamed component and the hollow structure. For this purpose, the end-portions for example may be S-shaped, U-shaped or may comprise a portion which is directed to the inner surface of the hollow structure and a second portion following the portion which is directed to the inner surface of the hollow structure, this second portion being aligned parallel to the surface of the hollow structure to allow a connection of this second portion to the hollow structure.

To connect the end-portions of the tension-active reinforcing structure to the hollow structure any connecting method known to the skilled person ca be used. Suitable connecting methods for example are screwing, riveting, gluing, welding, soldering or combinations thereof. Particularly if the tension-active reinforcing structure and the hollow structure are made of a metal, particularly steel or aluminum, the end-portions of the tension-active reinforcing structure are welded or soldered to the hollow structure. Welding, soldering or gluing the end-portions of the tension-active reinforcing structure to the hollow structure have the additional advantage, that the connection is a material bond and, thus, if the composite component is subject to a cataphoretic painting for applying an anticorrosive, no anticorrosive needs to be applied to the part of the hollow structure where the end-portion is connected to and to the part of the end-portion of the tension-active reinforcing structure which is attached to the hollow structure.

The use of the reinforcing structure improves the corrosion-protection coating process of the hollow structure because it allows a clean flow of corrosion protection and other liquids through the gap and so improves the corrosion protection effect.

A process for producing such a composite component comprising a hollow structure and a foamed component which is inserted in the hollow structure with a gap being formed between the hollow structure and the foamed component comprises:
(a) forming a hollow structure;
(b) forming a foamed component with an inserted tension-active reinforcing structure, wherein end-portions of the tension-active reinforcing structure protrude from the foamed component;
(c) attaching the end-portions of the tension-active reinforcing structure to the hollow structure.

The hollow structure may be formed by any process for forming hollow structures known by a skilled person. If the hollow structure is an open hollow structure, the hollow structure may be formed for example by bending a flat sheet into the desired shape.

If the hollow structure is a closed hollow structure, the hollow structure may be formed by any process for forming profiles known to a skilled person, for example by producing at least two profile sections and connecting the profile sections, by roll forming or by extrusion. Other techniques to form the hollow structure are pultrusion or extrusion to form weld free closed profiles.

If the hollow structure is formed by producing at least two profile sections and connecting the profile sections, the connection may be realized by any connection known by the skilled person. The profile sections for example may be connected by welding, gluing, soldering, screwing or riveting. Particularly, if the profile sections are connected by screwing or riveting, it is possible to either to arrange the profile sections such that parts of the walls of the profile sections overlap and the rivets or screws are guided through the overlapping walls. Alternatively, it is also possible to provide each profile section with flanges and connect the flanges to form the hollow structure.

If a closed hollow structure is formed by roll forming, initially the profile is formed from a coil. By forming the profile, the edges of the sheet from the coil are bend such that they abut. After forming the profile, the abutting edges are welded and, thus, the closed hollow structure is produced.

Extrusion processes for producing the hollow structure also can be used for producing open hollow structures or closed hollow structures. Forming the hollow structure by an extrusion process has the advantage that due to pressing the metal through a mold, any shape of the profile can be produced, including shapes which are not producible by roll forming or bending.

In a second step which can be carried out independently of the forming of the hollow structure, the foamed component with the inserted tension-active reinforcing structure is formed. The hollow structure and the foamed component with the inserted tension-active reinforcing structure can be produced simultaneously or step by step, wherein if the components are produced one after the other, it is possible to firstly produce the hollow structure and then the foamed component with the inserted tension-active reinforcing structure or alternatively, to firstly form the foamed component with the inserted tension-active reinforcing structure and subsequently the hollow structure. Further, particularly if a plurality of composite components is to be produced, it is also possible to form all needed hollow structures and all needed foamed components with the inserted tension-active reinforcing structure separately and after having produced the separate components to connect all foamed components with the inserted tension-active reinforcing structure to the hollow structures.

For producing the foamed component with the inserted tension-active reinforcing structure, generally, firstly the tension-active reinforcing structure is formed. The tension-active reinforcing structure can be formed for example by casting or preferably by a pressing or deep-drawing process.

If the foamed component is made of a continuous foam, for producing the foamed component, it is preferred to place the tension-active reinforcing structure into a mold, and, afterwards, to inject a blowing agent comprising polymer melt or reactants for producing a polymer and a blowing agent into the mold and to form the foamed component in the mold. In the mold, the blowing agent expands and the polymer foam is formed. If reactants for producing a polymer are injected into the mold, during expansion the reactants react and form the polymer. Injecting reactants into the mold is particularly preferred if the polymer is a thermoset. Injecting a blowing agent comprising polymer into the mold is preferred for thermoplastic polymers. In this case, a melt of the polymer is injected into the mold and the foamed component is produced by an injection molding process.

If the foamed component is made of a particle foam, the foamed component with the inserted tension-active reinforcing structure may be formed for example by placing the tension-active reinforcing structure into a mold, injecting expanded polymer beads into the mold and connecting the expanded polymer beads to form the foamed component. The particle foam preferably is made of a thermoplastic polymer. To connect the expanded polymer beads, usually superheated steam is injected into the mold under pressure. By the superheated steam the surface of the expanded polymer beads starts to melt and, thus, the expanded polymer beads weld together forming the particle foam.

After producing the hollow structure and the foamed component with the inserted tension-active reinforcing structure, the hollow structure and the foamed component with the inserted tension-active reinforcing structure are connected.

To connect the foamed component with the inserted tension-active reinforcing structure to the hollow structure, end-portions of the tension-active reinforcing structure which protrude from the foamed component are attached to the hollow structure. The end-portions of the tension-active reinforcing structure may be attached to the hollow structure by welding, gluing, screwing, riveting, soldering or combinations thereof. Preferably, the end-portions of the tension-active reinforcing structure are attached to the hollow structure by welding, gluing or soldering and particularly by welding.

The thus produced composite component may be further worked up, for example by coating.

Usually, the composite component is a part of a bigger structure, for example of a vehicle chassis. In this case, the composite component and further parts are connected to form the bigger structure and subsequently, the bigger structure may be subject to a coating process. If the bigger structure is a vehicle chassis, usually the vehicle chassis is subjected to a cataphoretic painting to apply an anticorrosive to the chassis before spraying the color-coating to the vehicle. For drying and curing the coating layers, the chassis is passed through a drying oven after each coating step. Due to the temperatures in the drying oven and the temperature in a cataphoretic painting bath, the foamed component needs to be made of a temperature-stable material. Therefore, it is preferred to use a temperature-stable polyamide for forming the composite component.

Embodiments of the invention are shown in the figures and explained in more detail in the following description.

In the figures:
- Figure 1: shows a three-dimensional schematic sketch of a hollow structure and a foamed component to be inserted into the hollow structure;
- Figure 2: shows schematically a hollow structure with an embedded composite component made of a foamed component with an inserted tension-active reinforcing structure;
- Figure 3: shows a foamed component with an embedded tension-active reinforcing structure under a bending load;
- Figures 4a to 4d: show different possible cross sectional shapes of a foamed component;
- Figure 5: shows simulated force-displacement curves of a hollow structure, a hollow structure with a foamed component, a hollow structure with tension-active reinforcing structure and a hollow structure with foamed component and tension-active reinforcing structure.

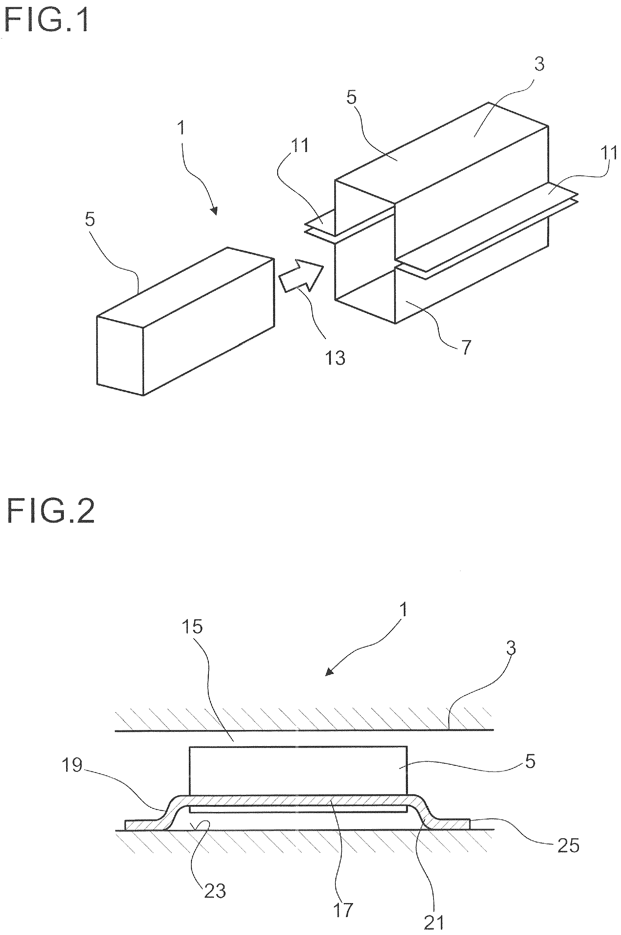

Figure 1 shows schematically a hollow structure and a foamed component to be inserted into the hollow structure.

A composite component 1 comprises a hollow structure 3 and a foamed component 5. In the embodiment shown here, the hollow structure 3 comprises a first profile section 7 and a second profile section 9, which are connected to form a closed hollow profile 3. To connect the first and second profile sections 7, 9, each of the first and second profile sections 7, 9, comprises a flange 11, the flanges being placed one above the other and connected. To connect the flanges 11, for example screws or rivets can be used. Further, it is also possible to connect the flanges by welding, soldering or gluing.

Besides using flanges as shown in figure 1, it is also possible to connect the first and second profile sections 7, 9 by sliding one of the profile sections into the other such that a part of the walls of the first and second profile sections are in contact and to connect the first and second profile section be screwing, riveting, gluing, soldering or welding. If the first and second profile sections are connected by welding or soldering, it is also possible to position the profile sections edge to edge and to connect the edges.

After forming the hollow structure 3, the foamed component 5 is inserted into the hollow structure 3 as indicated here by arrow 13.

A schematic cross sectional view of a composite component 1 is shown in figure 2.

In the composite component, the foamed component 5 is located in the hollow structure 3 in such a way that a gap 15 is formed between the foamed component 5 and the hollow structure 3. The gap 15 thereby is formed such that the whole surface of the foamed component 5 does not contact the hollow structure 3.

For placing the foamed component 5 in the hollow structure 3, a tension-active reinforcing structure 17 is used. The tension-active reinforcing structure 17 is embedded in the foamed component 5 and only end-portions 19 protrude from the foamed component 5. The end-portions 19 comprise a portion 21 which is directed to the inner surface 23 of the hollow structure 5 and a second portion 25 which is aligned parallel to the inner surface 23 of the hollow structure 3.

To fix the foamed component 5 in the hollow structure 3, the second portion 25 of the end-portions 19 is fixed to the inner surface 23 of the hollow structure 3. Fixing of the second portion 25 of the end-portions 19 can be achieved by any fixing method known to a skilled person, for example by screwing, riveting, welding, soldering or gluing, with welding, soldering or gluing being preferred.

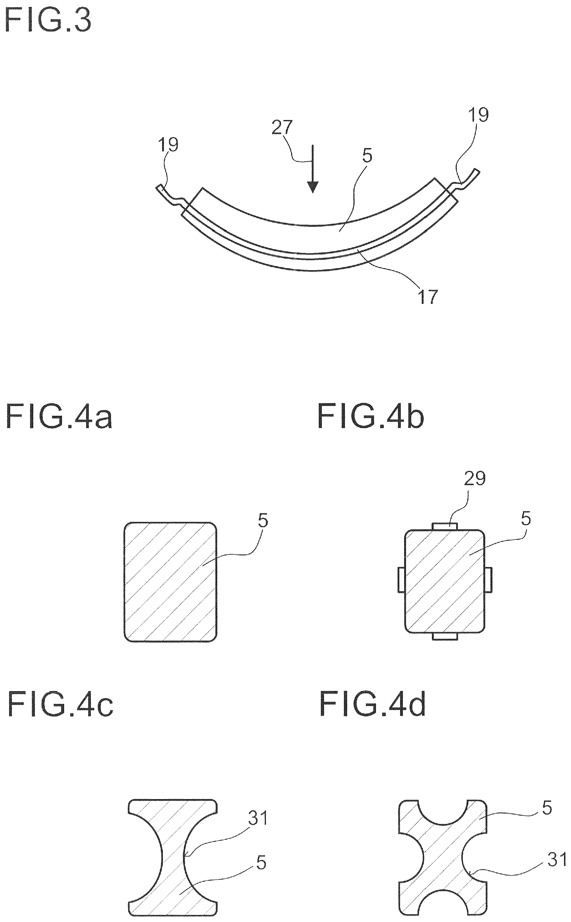

The tension-active reinforcing structure 17 and the foamed component 5 support the hollow structure 5 in absorbing energy if an impact acts on the composite component. The tension-active reinforcing structure 17 preferably is located in the hollow structure 3 such that the tension-active reinforcing structure 17 bends in the direction of that side of the hollow structure 5 on which the second portions 25 are mounted. Such a deformation of the foamed component 5 with an embedded tension-active reinforcing structure 17 is exemplarily shown in figure 3.

During an impact 27, the composite component 1 including the foamed component 5 and the tension-active reinforcing structure 17 deforms and by this deformation, energy of the impact is absorbed. The tension-active reinforcing structure 17 and the foamed component 5 support the energy absorption properties of the composite component and particularly increase the load which can be absorbed by the composite component before it finally fails. On the side, the impact acts on, the foamed component is compressed and a compression stress acts on the foamed component and the tension-active reinforcing structure whereas on the opposite side a tension stress acts on the foamed component and the tension-active reinforcing structure.

Further, as shown in figure 3, the tension-active reinforcing structure 17 is placed in the foamed component 5 in the region of positive stresses under bending. This allows for absorbing high tensional forces although the tension-active reinforcing structure 17 is bending, because due to the compression strength of the foamed component 5, the tension-active reinforcing structure 17 stays in place and contributes to the bending stiffness.

If multiple load directions are present which differ by the position of tension and compression distribution it is preferable, that more than one reinforcing structure is used to ensure that at least one of them is under tension in the case of a mechanical load.

Different shapes of the foamed component which can be inserted into rectangular hollow structures 3 are shown in figures 4a to 4d.

In figures 4a and 4b, the foamed component has a rectangular cross-sectional shape with rounded edges. By using foamed components 5 with such a shape, a gap between the foamed component 5 and the hollow structure 3 with a largely uniform width can be achieved.

Besides the tension-active reinforcing structure 17 for providing the gap between the foamed component 5 and the hollow structure 3, additional spacers 29 can be arranged between the hollow structure 3 and the foamed component 5 for adjusting the gap 15.

Particularly for reducing the mass of the composite component, it may be advantageous to form recesses 31 in the surfaces of the foamed component 5 as shown for example in figures 4c and 4d. By the recesses, the energy absorbing properties and particularly the supporting function of the foamed component 5 remains despite the reduced mass of the foamed component 5.

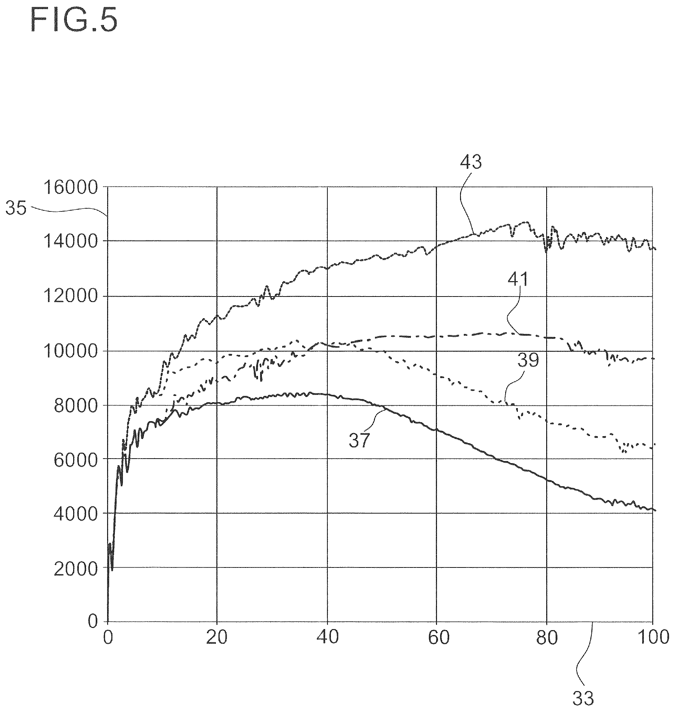

In figure 5, force-displacement curves for a hollow structure 3, a hollow structure 3 with a foamed component 5, a hollow structure 3 with a tension-active reinforcing structure 17, and a hollow structure 3 with a foamed component 5 and a tension-active reinforcing structure 17 are shown to underline the mechanical improvement which is possible by the described invention.

In the diagram of figure 5, the abscissa 33 indicates the magnitude of displacement in mm and the ordinate 35 indicates the magnitude of force in N.

The force-displacement curve for a hollow structure 3 without a foamed component 5 and without a tension-active reinforcing structure 7 is shown by the solid line 37, the force-displacement curve for a hollow structure 3 with a tension-active reinforcing structure 7 and without a foamed component 5 is shown by a dashed line 39, the force-displacement curve for a hollow structure 3 with a foamed component 5 and without a tension-active reinforcing structure 17 is shown by a dot-and-dash line 41 and the force-displacement curve for an inventive composite component 1 with a hollow structure 3, a foamed component 5 and a tension-active reinforcing structure 17 is shown by a dotted line 43.

As can be seen, the force which can be absorbed by the structure firstly increases and after having passed a maximum decreases again for the hollow structure 3 without a foamed component and tension-active reinforcing structure and for the hollow structure 3 with only a tension-active reinforcing structure 17, wherein the hollow structure 3 with the tension-active reinforcing structure 17 can absorb more force than the hollow structure 3 without any reinforcing components.

If the hollow structure 3 comprises a foamed component 5, the force which can be sustained reaches a maximum value and after having reached that maximum value, only slightly decreases.

A composite component which comprises a foamed component 5 and a tension-active reinforcing structure 17 can sustain much more force than the other structures and the maximum even is higher than would be expected by adding the additional forces which can be absorbed by only the foamed component 5 or by only the tension-active reinforcing structure 17.

As the induced energy is directly proportional to the integral of the force-displacement curve, the energy absorbed by the component is proportional to the indicated force. Hence all previous conclusions apply for both force and absorbed energy.

## Claims

1. A composite component (1) comprising a hollow structure (3) and a foamed component (5) which is inserted in the hollow structure (3), a gap (15) being formed between the hollow structure (3) and the foamed component (5), wherein a tension-active reinforcing structure (17) is connected to the foamed component (5) and end-portions (19) of the tension-active reinforcing structure (17) are connected to the hollow structure (3) in such a way that the foamed component (5) does not contact the hollow structure (3) and the gap (15) is formed between the hollow structure (3) and the foamed component (5).

2. The composite component according to claim 1, wherein the hollow structure (3) is made of a metal.

3. The composite component according to claim 2, wherein the metal is steel or aluminum.

4. The composite component according to any of claims 1 to 3, wherein the foamed component (5) is made of a polymer foam.

5. The composite component according to claim 4, wherein the polymer foam is one of polyurethane foam or polyamide foam.

6. The composite component according to claim 4 or 5, wherein the polymer foam is a particle foam.

7. The composite component according to any of claims 1 to 6, wherein the tension-active reinforcing structure (17) is a beam, a strip, or a rod.

8. The composite component according to any of claims 1 to 7, wherein the tension-active reinforcing structure (17) is made of a metal.

9. A process for producing a composite component according to any of claims 1 to 8, the process comprising:
(a) forming a hollow structure (3);
(b) forming a foamed component (5) with an inserted tension-active reinforcing structure (17), wherein end-portions (19) of the tension-active reinforcing structure (17) protrude from the foamed component (5);
(c) attaching the end-portions (19) of the tension-active reinforcing structure (17) to the hollow structure (3).

10. The process according to claim 9, wherein the end-portions (19) of the tension-active reinforcing structure (17) are attached to the hollow structure (3) by welding, gluing, screwing, riveting, soldering or combinations thereof.

11. The process according to claim 9, wherein the hollow structure (3) is formed by producing at least two profile sections (7, 9) and connecting the profile sections (7, 9), by roll forming, or by extrusion.

12. The process according to any of claims 9 to 11, wherein the foamed component (5) with the inserted tension-active reinforcing structure (17) is formed by placing the tension-active reinforcing structure (17) into a mold, injecting a blowing agent comprising polymer melt or reactants for producing a polymer and a blowing agent into the mold and forming the foamed component (5) in the mold.

13. The process according to any of claims 9 to 11, wherein the foamed component (5) with the inserted tension-active reinforcing structure (17) is formed by placing the tension-active reinforcing structure (17) into a mold, injecting expanded polymer beads into the mold and connecting the expanded polymer beads to form the foamed component (5).

## Patentansprüche

1. Eine Verbundkomponente (1) bestehend aus einer hohlen Struktur (3) und einer geschäumten Komponente (5), die in die hohle Struktur eingesetzt wird (3), wobei eine Lücke (15) zwischen der hohlen Struktur (3) und der geschäumten Komponente (5) gebildet wird, wobei eine zugaktive Bewehrungsstruktur (17) mit der geschäumten Komponente (5) verbunden ist und Endabschnitte (19) der zugaktiven Bewehrungsstruktur (17) so mit der hohlen Struktur (3) verbunden sind, dass die geschäumte Komponente (5) berührt nicht die hohle Struktur (3) und die Lücke (15) bildet sich zwischen der hohlen Struktur (3) und der schaumigen Komponente (5).

2. Die Verbundkomponente gemäß Anspruch 1, bei der die hohle Struktur (3) aus einem Metall besteht.

3. Die Verbundkomponente gemäß Anspruch 2, wobei das Metall Stahl oder Aluminium ist.

4. Die Verbundkomponente gemäß einer der Ansprüche 1 bis 3, wobei die geschäumte Komponente (5) aus einem Polymerschaum besteht.

5. Die Verbundkomponente ist laut Anspruch 4, wobei der Polymerschaum aus Polyurethan- oder Polyamidschaumstoff besteht.

6. Die Verbundkomponente gemäß Behauptung 4 oder 5, wobei der Polymerschaum ein Partikelschaum ist.

7. Die Verbundkomponente gemäß einem der Ansprüche 1 bis 6, wobei die zugaktive Bewehrungsstruktur (17) ein Balken, ein Streifen oder eine Stange ist.

8. Die Verbundkomponente gemäß einem der Ansprüche 1 bis 7, wobei die zugaktive Bewehrungsstruktur (17) aus einem Metall besteht.

9. Ein Verfahren zur Herstellung eines zusammengesetzten Bauteils gemäß einem der Ansprüche 1 bis 8, der Prozess umfasst:
(a) wodurch eine hohle Struktur entstand (3);
(b) wodurch eine geschäumte Komponente (5) mit einer eingesetzten zugaktiven Bewehrungsstruktur (17) entsteht, wobei Endteile (19) der zugaktiven Bewehrungsstruktur (17) aus der geschäumten Komponente herausragen (5);
(c) wobei die Endabschnitte (19) der zugaktiven Bewehrungsstruktur (17) an der Hohlstruktur (3) befestigt werden (3).

10. Der Vorgang gemäß Anspruch 9, bei dem die Endabschnitte (19) der zugaktiven Bewehrungsstruktur (17) durch Schweißen, Verkleben, Schrauben, Nieten, Löten oder deren Kombinationen an die hohle Struktur (3) befestigt werden.

11. Der Prozess gemäß Anspruch 9, bei dem die Hohlstruktur (3) durch Erzeugung von mindestens zwei Profilabschnitten (7, 9) und Verbindung der Profilabschnitte (7, 9) durch Walzformen oder durch Extrudion gebildet wird.

12. Der Vorgang gemäß einem der Ansprüche 9 bis 11 besteht darin, dass die geschäumte Komponente (5) mit der eingesetzten zug-aktiven Bewehrungsstruktur (17) gebildet wird, indem die zug-aktive Bewehrungsstruktur (17) in eine Form gegeben, ein Blasmittel mit Polymerschmelze oder Reaktanten zur Herstellung eines Polymers und eines Blasmittels in die Form eingespritzt und die geschäumte Komponente (5) in der Form geformt wird.

13. Der Vorgang gemäß einer der Behauptungen 9 bis 11, bei dem die geschäumte Komponente (5) mit der eingesetzten spannungsaktiven Verstärkungsstruktur (17) gebildet wird, indem die spannungsaktive Verstärkungsstruktur (17) in eine Form eingefügt wird, expandierte Polymerperlen in die Form eingespritzt und die expandierten Polymerperlen verbunden werden, um die schäumige Komponente zu bilden (5).

## Revendications

1. Un composant composite (1) comprenant une structure creuse (3) et un composant mousseux (5) inséré dans la structure creuse (3), un espace (15) se formant entre la structure creuse (3) et la composante mousseuse (5), où une structure d'armature active en tension (17) est reliée au composant moussé (5) et les parties terminales (19) de la structure d'armature active en tension (17) sont reliées à la structure creuse (3) de telle sorte que la composante moussée (5) ne contacte pas la structure creuse (3) et l'espace (15) se forme entre la structure creuse (3) et la composante mousseuse (5).

2. Le composant composite selon la revendication 1, où la structure creuse (3) est faite d'un métal.

3. Le composant composite selon la revendication 2, où le métal est en acier ou en aluminium.

4. Le composant composite selon l'une des revendications 1 à 3, où le composant mousseux (5) est constitué d'une mousse polymère.

5. Le composant composite selon l'affirmation 4, où la mousse polymère est une mousse de polyuréthane ou de mousse de polyamide.

6. Le composant composite selon la revendication 4 ou 5, où la mousse polymère est une mousse à particules.

7. Le composant composite selon l'une des revendications 1 à 6, où la structure d'armature active en tension (17) est une poutre, une bande ou une tige.

8. Le composant composite selon l'une des revendications 1 à 7, où la structure d'armature à effet de tension (17) est faite d'un métal.

9. Un procédé permettant de produire un composant composite selon l'une des revendications 1 à 8, le procédé comprenant :
(a) formant une structure creuse (3) ;
(b) formant un composant mousseux (5) avec une structure d'armature active en tension insérée (17), où les extrémités (19) de la structure d'armature active en tension (17) dépassent du composant mousseux (5) ;
(c) fixation des portions terminales (19) de la structure d'armature active en tension (17) à la structure creuse (3).

10. Le procédé selon la revendication 9, dans lequel les parties terminales (19) de la structure d'armement à traction active (17) sont fixées à la structure creuse (3) par soudure, collage, vissage, rivetage, soudure ou combinaisons de ces méthodes.

11. Le procédé selon la revendication 9, dans lequel la structure creuse (3) est formée en produisant au moins deux sections profilées (7, 9) et en reliant les sections profilées (7, 9), par formage par rouleau ou par extrusion.

12. Le procédé, selon l'une des revendications 9 à 11, consiste dans lequel le composant mousseux (5) avec la structure d'armature active en tension insérée (17) est formé en plaçant la structure d'armature active en tension (17) dans un moule, en injectant un agent de soufflage composé de polymère fondu ou de réactifs pour produire un polymère et un agent de soufflage dans le moule, puis en formant le composant en mousse (5) dans le moule.

13. Le procédé, selon l'une des revendications 9 à 11, consiste à former le composant mousseux (5) avec la structure de renfort actif en tension insérée (17), en plaçant la structure de renfort actif en tension (17) dans un moule, en injectant des billes polymères expansées dans le moule et en reliant les billes polymères expansées pour former le composant mousseux (5).
